(19) Europäisches Patentamt
European Patent Office
Office européen des brevets

(11) Veröffentlichungsnummer : **0 183 116**
**B1**

(12) # EUROPÄISCHE PATENTSCHRIFT

(45) Veröffentlichungstag der Patentschrift : **22.02.89**

(51) Int. Cl.⁴ : **C 08 L 69/00**, C 08 K 5/00

(21) Anmeldenummer : **85114310.7**

(22) Anmeldetag : **11.11.85**

(54) **Thermoplastische Formmassen mit flammwidrigen Eigenschaften.**

(30) Priorität : **22.11.84 DE 3442571**
**08.12.84 DE 3444867**

(43) Veröffentlichungstag der Anmeldung : **04.06.86 Patentblatt 86/23**

(45) Bekanntmachung des Hinweises auf die Patenterteilung : **22.02.89 Patentblatt 89/08**

(84) Benannte Vertragsstaaten : **DE FR GB IT NL**

(56) Entgegenhaltungen :
**DE-A- 2 162 437**
**FR-A- 2 204 649**
**FR-A- 2 239 512**
**US-A- 3 773 715**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Tödtemann, Gert**
**Neuenweg 5**
**D-5632 Wermelskirchen 3 (DE)**
Erfinder : **Reinking, Klaus, Dr.**
**Robert-Stolz-Strasse 16b**
**D-5632 Wermelskirchen (DE)**
Erfinder : **Koch, Otto, Dr.**
**Morgengraben 12**
**D-5000 Koeln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 183 116 B1

**Beschreibung**

Legierungen aus 5-95 Gew.-% aromatischer Polycarbonate und 95-5 Gew.-% Styrol-Maleinsäureanhydrid-Copolymeren mit 5-30 Gew.-% einpolymerisiertem Maleinsäureanhydrid sind thermoplastische Formmassen, die die Polycarbonate, denen sie in den meisten technologischen Eigenschaften ähneln, vor allem hinsichtlich Beständigkeit gegenüber heißem Wasser sowie hinsichtlich Fließfähigkeit der Schmelzen bei thermoplastischer Verarbeitung deutlich übertreffen (DE-OS 22 52 974).

Ein wesentlicher Nachteil der Legierungen aus aromatischen Polycarbonaten und Styrol-Maleinsäureanhydrid-Copolymeren ist jedoch, daß sie die gebräuchlichen Brandprüfungen, z. B. die Brandprüfungen gemäß UL, Subj. 94, nicht bestehen.

Dieser Nachteil kann zwar durch Einarbeiten geeigneter Brandschutzsysteme, z. B. von aromatischen Bromverbindungen und von Antimontrioxid (siehe US-PS 4 151 218) beseitigt werden, man handelt sich jedoch dadurch andere Nachteile ein, beispielsweise Schwierigkeiten bei der Verarbeitbarkeit, insbesondere bei hohen Temperaturen.

Die EP-A-103 230 offenbart Formmassen von Tetramethylbisphenol-A-Polycarbonaten mit Styrol/Maleinsäureanhydrid Copolymerisaten, Polyphosphorverbindungen und Polytetrafluorethylen, deren Brandverhalten noch verbesserungsbedürftig ist.

Ziel der vorliegenden Erfindung ist daher die Entwicklung von flammwidrigen Polycarbonat-Legierungen, die diese Nachteile nicht haben.

Gegenstand der vorliegenden Erfindung sind daher thermoplastische Formmassen bestehend aus

A) 50-90 Gew.-Teilen eines thermoplastischen, halogenfreien, aromatischen Polycarbonats, auf Basis der Diphenole der Formel (II)

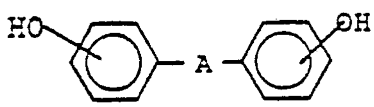

(II)

worin A eine Einfachbindung, ein $C_1$-$C_5$-Alkylen, ein $C_2$-$C_5$-Alkyliden, ein $C_5$-$C_6$-Cycloalkyliden, —S— oder —$SO_2$— ist,

B) 10-50 Gew.-Teilen eines halogenfreien statistisch aufgebauten Copolymerisats aus 95-70 Gew.-%, vorzugsweise 90-75 Gew.-% Styrol, α-Methylstyrol oder kernalkylierten Styrolen oder Mischungen der genannten Vinylaromaten und 5-30 Gew.-%, vorzugsweise 10-25 Gew.-% Maleinsäureanhydrid,

C) 5-20 Gew.-Teilen, vorzugsweise 5-15 Gew.-Teilen, bezogen auf 100 Teile Gesamtgewicht aus A) + B), einer halogenfreien Phosphorverbindung der Formel

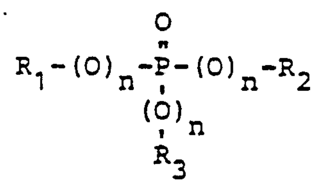

(I)

worin $R_1$, $R_2$ und $R_3$ unabhängig voneinander ein $C_1$-$C_8$-Alkyl oder ein gegebenenfalls alkylsubstituiertes $C_6$-$C_{20}$-Aryl sind und n für 0 oder 1 steht, und

D) 0,05-5 Gew.-Teile, bezogen wiederum auf 100 Teile Gesamtgewicht aus A) + B), insbesondere 0,1-1 Gew.-Teile eines Tetrafluorethylenpolymerisats mit einem Fluorgehalt von 65-76 Gew.-%.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan oder 1,1-Bis-(4-hydroxyphenyl)-cyclohexan.

Bevorzugte Diphenole der Formel (II) sind 2,2-Bis-(4-hydroxyphenyl)-propan und 1,1-Bis-(4-hydroxyphenyl)-cyclohexan.

Die Diphenole der Formel (II) sind entweder literaturbekannt oder nach literaturbekannten Verfahren herstellbar.

Die Herstellung der erfindungsgemäß geeigneten Polycarbonate gemäß Komponente A.) ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Die erfindungsgemäß geeigneten Polycarbonate gemäß Komponente A.) haben im allgemeinen mittlere Gewichtsmittelmolekulargewichte ($\bar{M}w$, gemessen beispielsweise durch Ultrazentrifugation oder durch Streulichtmessung) von 10 000 bis 100 000, vorzugsweise von 20 000 bis 80 000.

Die erfindungsgemäß geeigneten Polycarbonate gemäß Komponente A.) sind sowohl Homopolycarbonate als auch Copolycarbonate.

Die erfindungsgemäß geeigneten Polycarbonate gemäß Komponente A.) können in bekannter Weise verzweigt sein, und zwar vorzugsweise durch den Einbau von 0,05 bis 2,0 Mol-%, bezogen auf die Summe der eingesetzten Mole Diphenole, an drei- oder mehr als dreifunktionellen Verbindungen, beispielsweise solchen mit drei oder mehr als drei phenolischen OH-Gruppen.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbaren Chlor sind halogenfreie Polycarbonate im Sinne vorliegender Erfindung.

Die erfindungsgemäß geeigneten halogenfreien Styrol-Maleinsäureanhydrid-Copolymeren gemäß Komponente B.) sind statistisch aufgebaut. Solche statistisch aufgebauten Copolymerisate können bevorzugt durch eine kontinuierliche Masse- oder Lösungspolymerisation bei unvollständigen Umsätzen aus den entsprechenden Monomeren hergestellt werden.

Der bevorzugte Gehalt an Maleinsäureanhydrid in Komponente B liegt zwischen 10 und 25 Gew.-%.

Anstelle von Styrol und α-Methylstyrol geeignete kernalkylierte Styrole sind beispielsweise Vinyltoluol und 2,4-Dimethylstyrol.

Die Molekulargewichte der erfindungsgemäß geeigneten statistisch aufgebauten Styrol-Maleinsäureanhydrid-Copolymeren gemäß Komponente B.) können über einen weiteren Bereich variieren. Bevorzugt ist für diese Produkte eine Grenzviskositätszahl von [η] von 0,4-0,9 (gemessen in Dimethylformamid bei 25 °C ; siehe hierzu : Hoffmann, Krömer, Kuhn, Polymeranalytik I, Stuttgart 1977, S. 316 ff.).

Die erfindungsgemäß geeigneten halogenfreien Phosphorverbindungen gemäß Komponente C.) sind generell bekannt (s. beispielsweise Ullmann, Enzyklopädie der technischen Chemie, Bd. 18, S. 301 ff, 1979 ; Houben-Weyl, Meth. d. org. Chemie, Bd. 12/1, S. 43, S. 136 ; Beilstein, Bd. 6, S. 177).

Erfindungsgemäß geeignete Phosphorverbindungen gemäß Komponente C.), Formel (I), sind beispielsweise Triphenylphosphat, Trikresylphosphat, Diphenyl-2-ethylkresylphosphat, Tri-(iso-propylphenyl)-phosphat, Methanphosphonsäurediphenylester, Phenylphosphonsäure-diethylester, Triphenylphosphinoxid oder Trikresylphosphinoxid.

Die erfindungsgemäß geeigneten Tetrafluorethylenpolymerisate gemäß Komponente D.) sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer.

Diese Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 $kg/cm^2$ und bei Temperaturen von 0 bis 200 °C, vorzugsweise bei Temperaturen von 20 bis 100 °C. (US-Patent 2 393 967). Die Dichte dieser Materialien liegt vorzugsweise im Bereich von 2,0 bis 2,3 $g/m^3$ und die Teilchengrößen liegen vorzugsweise im Bereich von 100 bis 1 000 μm.

Die erfindungsgemäßen thermoplastischen Formmassen können weitere für Polycarbonate oder für Styrol-Maleinsäureanhydrid-Copolymere bekannte Zusätze, ausgewählt aus der Gruppe der Stabilisatoren, Pigmente, Fließmittel, Entformungsmittel und/oder Antistatika, enthalten.

Die erfindungsgemäßen Formmassen, bestehend aus den Komponenten A.), B.), C.) und D.) und gegebenenfalls weiteren bekannten Zusätzen ausgewählt aus der Gruppe der Stabilisatoren, Pigmengen, Fließmitteln, Entformungsmittel und/oder Antistatika werden hergestellt, indem man die jeweiligen Bestandteile in bekannter Weise vermischt und bei Temperaturen von 220 bis 330 °C in üblichen Aggregaten wie Innenknetern oder Ein- oder Zweischneckenextrudern schmelzcompoundiert oder schmelzextrudiert, oder indem man die Lösungen der jeweiligen Komponenten in geeigneten organischen Lösungsmitteln, beispielsweise in Chlorbenzol, mischt und die Lösungsgemische in üblichen Aggregaten, beispielsweise in Eindampfextrudern, eindampft.

Gegenstand der vorliegenden Erfindung ist somit auch ein Verfahren zur Herstellung von thermoplastischen Formmassen bestehend aus den Komponenten A.), B.), C.) und D.) sowie gegebenenfalls Stabilisatoren, Pigmenten, Fließmitteln, Entformungsmitteln und/oder Antistatika, das dadurch gekennzeichnet ist, daß man die Komponenten A.), B.), C.) und D.), sowie gegebenenfalls Stabilisatoren, Pigmente, Fließmittel, Entformungsmittel und/oder Antistatika nach erfolgter Vermischung bei Temperaturen von 220 bis 330 °C in gebräuchlichen Aggregaten schmelzcompoundiert oder schmelzextrudiert, oder daß man die Lösungen dieser Komponenten in geeigneten organischen Lösungsmitteln nach erfolgter Vermischung in gebräuchlichen Aggregaten eindampft.

Die Formmassen der vorliegenden Erfindung können zur Herstellung von Fomkörpern jeder Art verwendet werden. Insbesondere können Formkörper durch Spritzguß hergestellt werden. Beispiele für herstellbare Formkörper sind : Gehäuseteile jeder Art (z. B. für Haushaltsgeräte wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

## Beispiele

Eingesetzte Legierungskomponenten :

A : Polycarbonat aus 2,2-Bis-(4-hydroxyphenyl)-propan (Bisphenol A) mit einer relativen Lösungsviskosität von 1,320, gemessen in Methylenchlorid bei 23° und einer Konzentration von 0,5 Gew.-%.

B : Herstellung der Copolymer-Harze

In einem ummantelten Gefäß, das mit Innenthermometer, Rührer, Ein- und Auslaß versehen ist, werden 750 Teile eines Gemisches mit einer Zusammensetzung gemäß Tabelle 1 vorgelegt und auf 130 °C erwärmt. Dann wird ein Monomerstrom, von 1 100 Teilen derselben Zusammensetzung so zudosiert und gleichzeitig dieselbe Menge an Polymerlösung dem Gefäß entnommen, daß der Füllstand im Gefäß gehalten wird. Dem Monomerstrom werden kontinuierlich ca. 0,05 Teile pro Stunde tert.-Butylperpivalat (75 %ig in Dibutylphthalat) zugefügt. Nach ca. 2 h hat sich ein konstanter Umsatz von ca. 40 % eingestellt. Die Polymerlösung wird mit 0,1 Gew.-% 2,6-Di-t-butyl-p-kresol versetzt und anschließend auf einem Ausdampfextruder von Monomeren und flüchtigen Bestandteilen befreit. Die jeweiligen Grenzviskositätszahlen, bestimmt durch Messung in Dimethylformamid (DMF) bei 25 °C, sind in Tabelle 1 aufgeführt.

Tabelle 1 : Zusammensetzung der Einsatzmonomeren und der Copolymerisate B

| | Einsatzmonomere (Gew.-%) | | Copolymerisat (Gew.-%) | | Grenzviskositätszahl |
|---|---|---|---|---|---|
| | Styrol | Maleinsäureanhydrid | Styrol | Maleinsäureanhydrid | des Copolymerisats [η] |
| B1 | 95.5 | 4.4 | 89 | 11 | 0,499 |
| B2 | 93.8 | 6.2 | 84.5 | 15.5 | 0,514 |
| B3 | 93.2 | 6.8 | 83 | 17 | 0,518 |
| B4 | 92.0 | 8.0 | 80 | 20 | 0,503 |

C1 : Diphenylkresylphosphat
C2 : Triphenylphosphat
C3 : Triphenylphosphinoxid
C4 : Methylphosphonsäurediphenylester
D : Polytetrafluorethylen in Pulverform mit einer Teilchengröße von 500-650 µm (Hostaflon TF 2026 der Fa. Hoechst).

Die Compoundierung der Komponenten A, B 1-4, C 1-4 und D erfolgte auf einem Doppelwellenextruder (ZSK 32 der Firma Werner & Pfleiderer) bei Temperaturen zwischen 230 und 250 °C.

Die Herstellung der Formkörper erfolgte auf einer Spritzgießmaschine bei 250 °C.

Das Brandverhalten der Proben wurde nach UL-Subj. 94 V in Prüfkörperdicken von 1,6 und 3,2 mm gemessen. Der UL 94 V-Test wird wie folgt durchgeführt :

Substanzproben werden zu Stäben der Abmessungen 127 × 12,7 × 1,6 mm bzw. 127 × 12,7 × 3,2 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 sec-Dauer entzündet.

Die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einem Wärmeinhalt von $3{,}73 \times 10^4$ kJ/m$^3$ (1,000 BTU per cubic foot) benutzt.

Die UL 94 V-O-Klassifizierung umfaßt die nachstehend beschriebenen Eigenschaften von Materialien, die gemäß der UL-94-Vorschrift geprüft werden. Die Materialien in dieser Klasse enthalten keine Proben, die länger als 10 sec nach jeder Einwirkung der Testflamme brennen ; sie zeigen keine Gesamtflammzeit von mehr als 50 sec bei der zweimaligen Flammeinwirkung auf jeden Probensatz ; sie enthalten keine Proben, die vollständig bis hinauf zu der am oberen Ende der Probe befestigten Halteklammer abbrennen ; sie weisen keine Proben auf, die die unterhalb der Probe angeordnete Watte durch brennende Tropfen oder Teilchen entzünden ; sie enthalten auch keine Proben, die länger als 30 sec nach Entfernen der Testflamme glimmen.

Andere UL 94-Klassifizierungen bezeichnen Proben, die eine längere Nachbrennzeit aufweisen (Klassifizierung V-1) oder die außerdem brennende Tropfen oder Teilchen abgeben, die die unterhalb der Probe angeordnete Watte entzünden (Klassifizierung V-2). Die Klassifizierung n. b. heißt « nicht bestanden » und bedeutet, daß die Proben eine Nachbrennzeit von ⩾ 30 sec aufweisen.

Aus der folgenden Tabelle können die genauen Zusammensetzungen der geprüften Formmassen sowie die erhaltenen UL 94-Klassifizierungen entnommen werden.

| | A G.-Tle | B1 G.-Tle | B2 G.-Tle | B3 G.-Tle | B4 G.-Tle | C1 G.-Tle | C2 G.-Tle | C3 G.-Tle | C4 G.-Tle | D G.-Tle | UL 94 (1,6 mm) | UL 94 (3,2 mm) |
|---|---|---|---|---|---|---|---|---|---|---|---|---|
| | Vergleichsversuche | | | | | | | | | | | |
| V 1 | 70 | 30 | | | | | | | | | n.b. | n.b. |
| V 2 | 70 | | 30 | | | | | | | | n.b. | n.b. |
| V 3 | 70 | | | 30 | | | | | | | n.b. | n.b. |
| V 4 | 70 | | | | 30 | | | | | | n.b. | n.b. |
| | Versuche gemäß der vorliegenden Erfindung | | | | | | | | | | | |
| E 1 | 70 | 30 | | | | 10 | | | | 0,2 | V-2 | V-0 |
| E 2 | 70 | | 30 | | | 10 | | | | 0,2 | V-1 | V-0 |
| E 3 | 70 | | | 30 | | 10 | | | | 0,25 | V-1 | V-0 |
| E 4 | 70 | | | | 30 | 7,5 | | | | 0,2 | V-1 | V-0 |
| E 5 | 70 | | 30 | | | 10 | | | | 0,3 | V-1 | V-0 |
| E 6 | 75 | | 25 | | | 10 | | | | 0,25 | V-0 | V-0 |
| E 7 | 70 | | 30 | | | | 10 | | | 0,25 | V-1 | V-0 |
| E 8 | 70 | | 30 | | | | | 10 | | 0,3 | V-1 | V-0 |
| E 9 | 70 | | 30 | | | | | | 7,5 | 0,25 | V-2 | V-0 |
| E 10 | 75 | | | | 25 | | | 10 | | 0,25 | V-0 | V-0 |

**Patentansprüche**

1. Thermoplastische Formmassen bestehend aus

A) 50-90 Gew.-Teilen eines thermoplastischen, halogenfreien, aromatischen Polycarbonats auf Basis der Diphenole der Formel (II)

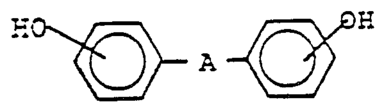

(II)

worin A eine Einfachbindung, ein $C_1$-$C_5$-Alkylen, ein $C_2$-$C_5$-Alkyliden, ein $C_5$-$C_6$-Cycloalkyliden, —S— oder —$SO_2$— ist,

B) 10-50 Gew.-Teilen eines halogenfreien statistisch aufgebauten Copolymerisats aus 95-70 Gew.-% Styrol, α-Methylstyrol oder kernalkylierten Styrolen oder Mischungen der genannten Vinylaromaten und 5-30 Gew.-% Maleinsäureanhydrid,

C) 5-20 Gew.-Teilen, bezogen auf 100 Teile Gesamtgewicht aus A) + B), einer halogenfreien Phosphorverbindung der Formel (I)

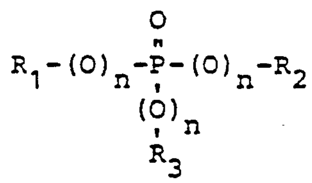

(I)

worin $R_1$, $R_2$ und $R_3$ unabhängig voneinander ein $C_1$-$C_8$-Alkyl oder ein gegebenenfalls alkylsubstituiertes $C_6$-$C_{20}$-Aryl sind und n für 0 oder 1 steht,

und D) 0,05-5 Gew.-Teile, bezogen wiederum auf 100 Teile Gesamtgewicht aus A) + B), eines Tetrafluorethylenpolymerisats mit einem Fluorgehalt von 65 bis 76 Gew.%.

2. Thermoplastische Formmassen bestehend aus den Formmassen gemäß Anspruch 1 und zusätzlich mindestens einem Zusatz, ausgewählt aus der Gruppe der Stabilisatoren, Pigmente, Fließmittel, Entformungsmittel und Antistatika.

3. Verfahren zur Herstellung der Formmassen des Anspruchs 1, dadurch gekennzeichnet, daß man die Komponenten A), B), C) und D) nach erfolgter Vermischung bei Temperaturen von 220 °C bis 330 °C in gebräuchlichen Aggregaten schmelzcompoundiert oder schmelzextrudiert.

4. Verfahren zur Herstellung der Formmassen des Anspruchs 1, dadurch gekennzeichnet, daß man Lösungen der Komponenten A), B), C) und D) in geeigneten organischen Lösungsmitteln mischt und die Lösungsgemische dann in gebräuchlichen Eindampfaggregaten eindampft.

5. Verfahren gemäß den Ansprüchen 3 und 4 zur Herstellung der Formmassen des Anspruchs 2, dadurch gekennzeichnet, daß man mindestens einen Zusatz, ausgewählt aus der Gruppe der Stabilisatoren, Pigmente, Fließmittel, Entformungsmittel und Antistatika einbezieht.

**Claims**

1. Thermoplastic moulding compositions consisting of

A) 50-90 parts by weight of a thermoplastic, halogenfree, aromatic polycarbonate based on the diphenols of the formula (II)

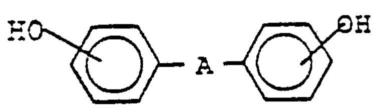

(II)

wherein A is a single bond, a $C_1$-$C_5$-alkylene, a $C_2$-$C_5$-alkylidene, a $C_5$-$C_6$-cycloalkylidene, —S— or —$SO_2$—,

B) 10-50 parts by weight of a halogen-free random-structure copolymer of 95-70 % by weight of styrene, α-methylstyrene or nuclear-alkylated styrenes or mixtures of the said vinylaromatics and 5-30 % by weight of maleic anhydride,

C) 5-20 parts by weight, based on 100 parts of total weight of A) + B), of a halogen-free phosphorus compound of the formula (I)

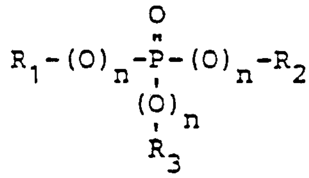

(I)

wherein $R_1$, $R_2$ and $R_3$ independently of one another are a $C_1$-$C_8$-alkyl or an optionally alkyl-substituted $C_6$-$C_{20}$-aryl and n represents 0 or 1,

and D) 0.05-5 parts by weight, again based on 100 parts of total weight of A) + B), of a tetrafluoroethylene polymer having a fluorine content of 65 to 76 % by weight.

2. Thermoplastic moulding compositions consisting of the moulding compositions according to Claim 1 and, additionally, at least one additive selected from the group of stabilizers, pigments, flow agents, mould release agents and antistatic agents.

3. Process for the preparation of the moulding compositions of Claim 1, characterized in that the components A), B), C) and D), after having been mixed, are melt-compounded or melt-extruded at temperatures of 220 °C to 330 °C in conventional equipment.

4. Process for the preparation of the moulding compositions of Claim 1, characterized in that solutions of components A), B), C) and D) are mixed in suitable organic solvents and the solution mixtures are then evaporated down in conventional evaporating-down equipment.

5. Process according to Claims 3 and 4 for the preparation of the moulding compositions of Claim 2, characterized in that at least one additive, selected from the group of stabilizers, pigments, flow agents, mould release agents and antistatic agents, is included.

## Revendications

1. Matières à mouler thermoplastiques constituées de

A) 50 à 90 parties en poids d'un polycarbonate aromatique thermoplastique dépourvu d'halogène à base des diphénols de formule (II)

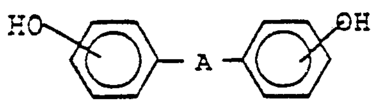

(II)

dans laquelle A désigne une liaison simple, un groupe alkylène en $C_1$ à $C_5$, un groupe alkylidène en $C_2$ à $C_5$, un groupe cycloalkylidène en $C_5$ ou $C_6$, —S— ou —$SO_2$—,

B) 10 à 50 parties en poids d'un copolymérisat à structure statistique, dépourvu d'halogène, de 95 à 70 % en poids de styrène, d'α-méthylstyrène ou de styrènes alkylés sur le noyau ou de mélanges des hydrocarbures aromatiques vinyliques mentionnés et de 5 à 30 % en poids d'anhydride d'acide maléique,

C) 5 à 20 parties en poids, pour 100 parties en poids du total de A) et B), d'un composé phosphoré non halogéné de formule (I)

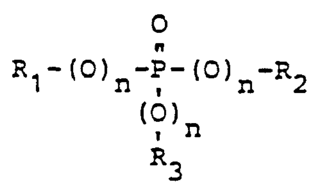

(I)

dans laquelle $R_1$, $R_2$ et $R_3$ représentent, indépendamment les uns des autres, un groupe alkyle en $C_1$ à $C_8$ ou un groupe aryle en $C_6$ à $C_{20}$ portant éventuellement un substituant alkyle et n a la valeur 0 ou 1,

et D) 0,05 à 5 parties en poids, là encore pour 100 parties en poids du total de A) et B) d'un produit de polymérisation du tétrafluoréthylène ayant une teneur en fluor de 65 à 76 % en poids.

2. Matières à mouler thermoplastiques constituées des matières à mouler suivant la revendication 1, contenant en outre au moins un additif choisi dans le groupe des agents stabilisants, des pigments, des agents fluidifiants, des agents de démoulage et des agents antistatiques.

3. Procédé de production des matières à mouler suivant la revendication 1, caractérisé en ce qu'on formule à l'état fondu ou on extrude à l'état fondu dans des appareils classiques les composants A), B), C) et D) une fois mélangés, à des températures de 220 à 330 °C.

4. Procédé de production des matières à mouler suivant la revendication 1, caractérisé en ce qu'on mélange des solutions des composants A), B), C) et D) dans des solvants organiques appropriés, puis on concentre par évaporation les mélanges de solutions dans des appareils classiques appropriés.

5. Procédé suivant les revendications 3 et 4 pour la production des matières à mouler suivant la revendication 2, caractérisé en ce qu'on incorpore au moins un additif choisi dans le groupe des agents stabilisants, des pigments, des agents fluidifiants, des agents de démoulage et des agents antistatiques.